# EUROPEAN PATENT APPLICATION

(11) **EP 2 493 260 A1**
(43) Date of publication of application: **29.08.2012**
(21) Application number: 10789007.1
(22) Date of filing: 30.06.2010
(51) Int. Cl.: H04W 88/08

(54) **METHOD AND DEVICE FOR RADIO REMOTE UNIT (RRU) LINK ADAPTATION**

(30) Priority: 30.10.2009 CN 200910209469
(71) Applicant: ZTE Corporation, Shenzhen, Guangdong 518057 (CN)
(72) Inventor: DONG, Yaorong, Shenzhen Guangdong 518057 (CN)
(74) Representative: Jansen, Cornelis Marinus
(86) International application number: PCT/CN2010/074784
(87) International publication number: WO 2010/145611

(57) **Abstract**

The disclosure discloses a method for link adaptation of a Radio Remote Unit (RRU), which comprises: an RRU regularly broadcasts and sends identifier acquisition request information through a port of the RRU itself; the RRU receives response information of the identifier acquisition request information; and when the response information is identifier allocation response information from a Base Band Unit (BBU), the RRU establishes an upper layer link according to an allocation identifier contained in the response information. The disclosure further discloses a device for implementing link adaptation of a radio remote unit. By adopting the disclosure, the problem of low reliability of RRU topological structure in the prior art can be solved.

## Description

### TECHNICAL FIELD

The disclosure relates to the field of communications, in particular to a method and device for link adaptation of a Radio Remote Unit (RRU).

### BACKGROUNDF

A Common Public Radio Interface (CPRI) is a specification for implementing an interface between a Base Band Unit (BBU) and an RRU in a base station. The interface supports the implementation of distributed configuration in a base station. A Radio Equipment Control (REC) and a Radio Equipment (RE) in a traditional base station are integrally configured and have many defects. In a distributed base station, the RE and the REC can be arranged separately, that is, a central REC manages and configures a set of Res, so as to realize fast and flexible configuration and networking of a base station, reduce capital and operation expenditures of operators and realize service expansion; and the CRPI protocol supports networking ways including chain, ring and tree networking.

In order to implement the distributed configuration of an RE, control and synchronization information must be transmitted between an REC and the RE, so that a digital interface which is as the same as that of a digital base band between the RE and REC must be utilized. The CPRI defines the physical layer and data link layer of the interface. In the physical layer, the connection media (optical interface), adaptation rate (supports three rates: 641.4Mbps, 1228.8Mbps and 2457.6Mbps, corresponding to three BFs), clock recovery, and data encoding format are stipulated. In the data link layer, the ways of delay correction and time division multiplexing (frame formats) are stipulated. In order to implement networking, the home RE of data is configured and an exchange layer is defined, so that data exchange between different REs or between the RE and the REC can be implemented. In the mapping layer, frame mapping to different user data planes can be implemented, and the frame mapping way can be flexibly configured by users.

At present, the cascade of the RRU adopts a static topological structure which is statically configured by a BBU and cannot be dynamically changed. Thus, the flexibility of the topological structure is limited and the RRU cannot be dynamically and randomly accessed; once the link between the RRU and BBU is disconnected or a certain RRU is damaged, all lower level RRUs cannot work normally, so that the reliability of the whole network is affected.

Therefore, for the problem that the reliability of the network is reduced due to the static configuration of the RRU topological structure, there is still no effective solution in the related art.

### SUMMARY

The main purpose of the disclosure is to provide a method and device for link adaptation of a Radio Remote Unit (RRU), in order to solve the problem of low reliability of the RRU topological structure in the prior art.

To achieve the purpose above, the technical solution of the disclosure is realized as follows.

A method for link adaptation of an RRU comprises:
regularly broadcasting and sending, by an RRU, identifier acquisition request information through a port of the RRU itself;
receiving, by the RRU, response information of the identifier acquisition request information; and
when the response information is identifier allocation response information from a Base Band Unit (BBU), establishing, by the RRU, an upper layer link according to an allocation identifier contained in the response information.

The method may further comprise: when the response information received by the RRU is acknowledgement information from an upper level RRU thereof,
when the RRU receives the acknowledgement information from multiple upper level RRUs, sending, by the RRU, second handshake identifier acquisition request information to an RRU with minimum identifier information among the multiple upper level RRUs; or when the RRU receives the acknowledgement information from one upper level RRU, sending, by the RRU, second handshake identifier acquisition request information to the one upper level RRU; and
receiving, by the RRU, the identifier allocation response information from the BBU through the upper level RRU, and establishing, by the RRU, the upper layer link according to the allocation identifier contained in the response information.

The method may further comprise: before sending, by the RRU, the identifier acquisition request information through the port of the RRU itself, acquiring, by the RRU, physical port information of the RRU itself.

The method may further comprise:
receiving, by the RRU, identifier acquisition request information from a lower level RRU thereof; and
sending, by the RRU, acknowledgement information of the identifier acquisition request information to the lower level RRU thereof.

The method may further comprise:
receiving, by the RRU, second handshake identifier acquisition request information from the lower level RRU thereof; and
forwarding, by the RRU, the second handshake identifier acquisition request information to the BBU; and
after receiving, by the RRU, the identifier allocation response information from the BBU, forwarding, by the RRU, the identifier allocation response information to the lower level RRU thereof.

The method may further comprise:
receiving, by the BBU, the identifier acquisition request information from the RRU, allocating, by the BBU, an identifier for the RRU, and sending, by the BBU, the identifier to the RRU; and
refreshing, by the BBU, a network topology structure.

A device for implementing link adaptation of an RRU, comprises:
a first sending module, configured to regularly broadcast and send identifier acquisition request information through a port;
a first receiving module, configured to receive response information of the identifier acquisition request information; and
an establishing module, configured to establish an upper layer link according to an allocation identifier contained in the response information, in case that the response information received by the first receiving module is identifier allocation response information from a Base Band Unit (BBU).

The device may further comprise:
a second sending module, configured to send second handshake identifier acquisition request information to an RRU with minimum identifier information among multiple upper level RRUs thereof, in case that the response information received by the first receiving module is acknowledgement information from the multiple upper level RRUs; and further configured to send second handshake identifier acquisition request information to one upper level RRU thereof, in case that the response information received by the first receiving module is acknowledgement information from the one upper level RRU; and
a second receiving module, configured to receive identifier allocation response information from the BBU through the upper level RRU.

The device may further comprise: an acquiring module, configured to acquire physical port information.

The device may further comprise:
a third receiving module, configured to receive the identifier acquisition request information; and
a third sending module, configured to send acknowledgement information of the identifier acquisition request information to a lower level RRU, in case that the third receiving module receives the identifier acquisition request information of the lower level RRU; and further configured to forward second handshake identifier acquisition request information to the BBU, in case that the third receiving module receives the second handshake identifier acquisition request information from the lower level RRU.

According to the above technical solutions of the disclosure, through actively initiating an ID request by the RRU and dynamically refreshing the topological structure by the BBU, the topological structure is dynamically established, so that the networking is more flexible, and the flexibility of REC networking and RE networking is brought into full play; and as multiple physical paths are established between the lower level and upper level RRUs, in case that a certain RRU is damaged or the optical fiber link in a certain level is disconnected, the lower level RRU will not be affected, so as to improve the reliability of the networking and save the cost on operation and maintenance.

### BRIEF DESCRIPTION OF THE DRAWINGS

Fig. 1 is a flowchart showing a method for link adaptation of a radio remote unit according to an embodiment of the disclosure;
Fig. 2 is a schematic diagram showing the control word format definition of an ID request according to an embodiment of the disclosure;
Fig. 3 is a schematic diagram showing the flow of ID acquisition by an RRU according to an embodiment of the disclosure;
Fig. 4 is a schematic diagram showing the process of topological structure establishment according to an embodiment of the disclosure; and
Fig. 5 is a block diagram showing a device for implementing link adaptation of a radio remote unit according to an embodiment of the disclosure.

### DETAILED DESCRIPTION

To make description of the purpose, technical solutions and advantages of the disclosure clearer, the disclosure is described in detail below with reference to the drawings and specific embodiments.

According to embodiments of the disclosure, a method for link adaptation of a radio remote unit is provided.

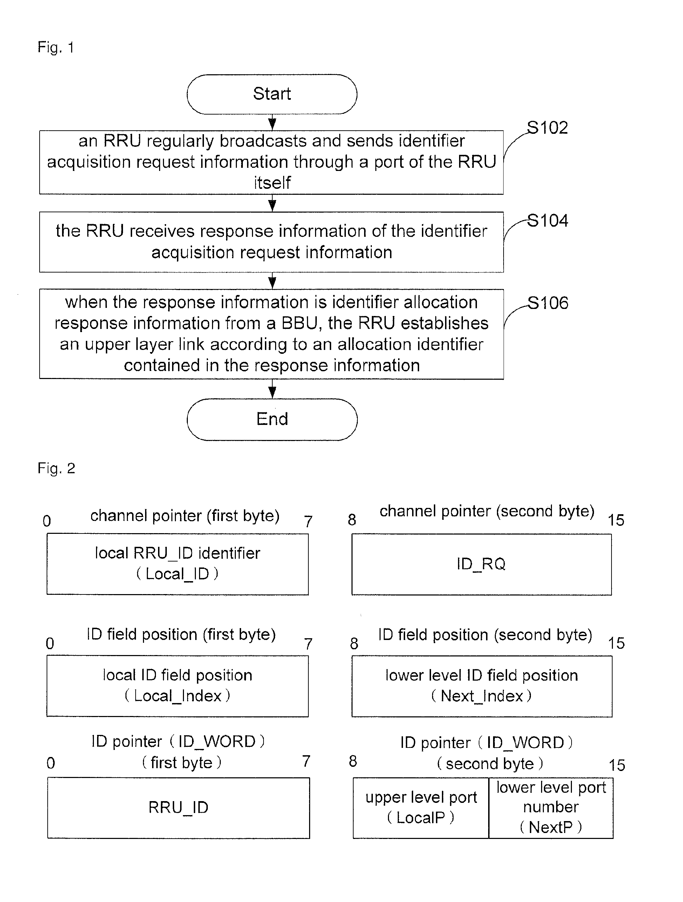

Fig. 1 is a flowchart showing a method for link adaptation of a radio remote unit according to an embodiment of the disclosure. As shown in Fig. 1, the method comprises:
step 102: regularly broadcasting and sending, by an RRU, identifier (ID) acquisition request information through a port of the RRU itself;
step 104: receiving, by the RRU, response information of the identifier acquisition request information; and
step 106: when the received response information is identifier allocation response information from a Base Band Unit (BBU), establishing, by the RRU, an upper layer link according to an allocation identifier contained in the response information.

Further, the connection between the BBU and the RRU in a radio communication base station is established by adopting the CPRI protocol, specifically, the establishment may further comprise:
step 1: when the RRU is connected to an optical fiber, the physical layer (CPRI) is automatically connected after it is powered on;
step 2: after the physical layer is connected, the RRU acquires a physical port number of itself;
step 3: the RRU is bond with the port number (NextP) and actively initiates an ID acquisition request;
step 4: after an upper level RRU receives the ID acquisition request of the lower level RRU, the upper level RRU verifies the port number and responds with a port number acknowledgement message to the lower level RRU;
step 5: the RRU requesting for an ID responds the port number acknowledgement message of the upper level RRU, after receiving the response, the upper level RRU upwards forwards the ID acquisition request; if the message received by the currently level RRU is an ID acquisition request forwarding message, the message is directly forwarded to the upper level level.
step 6: the BBU receives the ID acquisition request of the RRU, allocates an ID for the RRU, and dynamically refreshes the topological structure; and
step 7: the RRU acquires the ID and then establishes an upper layer link, so as to get the configuration.

In the CPRI protocol, 256 BFs act as a basic signalling unit, called a multiframe, which includes a customized field (i.e. Vendor specific). The definition of each data block in a control field is shown in Table 1.

**Table 1**

| subchannel number Ns | purpose of subchannel | Xs=0 | Xs=1 | Xs=2 | Xs=3 |
|---|---|---|---|---|---|
| 0 | sync&timing | sync byte K28.5 | HFN | BFN-low | BFN-high |
| 1 | slow C&M | slow C&M | slow C&M | slow C&M | slow C&M |
| 2 | L1 inband prot | version | startup | L1-reset-LOS | Pointer p |
| 3 | reserved | reserved | reserved | reserved | reserved |
| ... | ... | ... | ... | ... | ... |
| 15 | reserved | reserved | reserved | reserved | reserved |
| 16 | Vendor specific | | | | |
| ...... | ...... | | | | |
| 20 | Vendor specific | CC_WORD | | | |
| 21 | Vendor specific | ID_INDEX | | | |
| 22 | Vendor specific | ID_WORD | | | |
| | | | | | |
| | | | | | |
| | | | | | |
| p-1 | Vendor specific | | | | |
| pointer:p | Fast C&M | Fast C&M | Fast C&M | Fast C&M | Fast C&M |
| ... | ... | ... | ... | ... | ... |
| 63 | Fast C&M | Fast C&M | Fast C&M | Fast C&M | Fast C&M |

In the embodiments of the disclosure, the packet format of the common control channel is defined in the Vendor specific space as shown in Table 1, and as shown in Fig. 2, CC_WORD (Common Control Word) refers to a channel pointer, which identifies the type of the control field and includes information of two bytes, wherein the first byte (Local_ID) identifies a local RRU_ID and the second byte (ID_RQ) identifies a lower level request ID, and an ID_RQ being 0xFF represents an ID acquisition request identifier; the ID_Index represents the hierarchical relationship of the IDs, indicating the position of subsequent ID fields and including information of two bytes, wherein the first byte (Local_Index) identifies a local ID_Index, and the second byte (Next_Index) identifies a lower level ID_Index; and the ID_WORD contains RRU_ID, LocalP and NextP, wherein the ID number occupies one byte, LocalP and NextP represent upper level port and lower level port numbers respectively, each occupying 4 bytes, and 0xF represents invalidity. The position of three customized fields in Table 1 is only exemplary, and can be selected according to the specific circumstances. Here, the linear rate of 1228.8M is taken as an example, and the byte can be regulated if the linear rate is higher.

After receiving a complete multiframe, the RRU determines how to process according to the value of CC_WORD; if simultaneously receiving valid multiframes from multiple ports, the RRU needs to store and queen the multiframes, and process them during idle time.

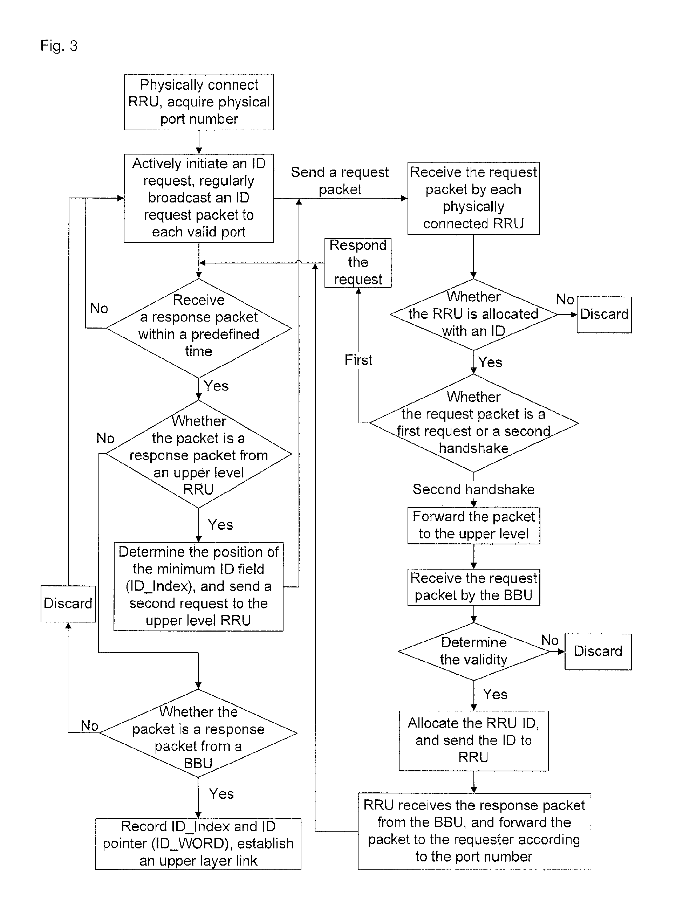

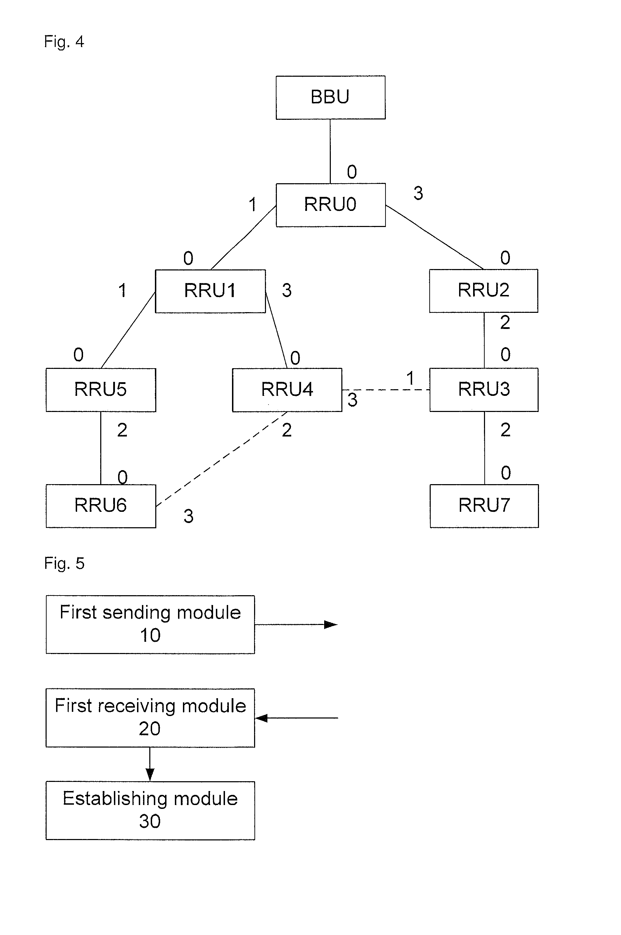

Examples of the disclosure are described in detail with reference to Fig. 3 and Fig. 4. In Fig. 4, solid lines represent physical connected and configured links, and dotted lines represent links that are physical connected only, and optical port numbers of the RRU in four directions are defined as 0, 1, 2 and 3, respectively. The RRU in Fig. 4 is numbered to be RRU_ID.

### Example 1:

Step 1, after being started, an RRU is in an initial state or has not be allocated with any ID or needs to be reallocated with an ID, the RRU_ID is to be 0xFF, and does not forward any port message.

Step 2, the RRU regularly broadcasts ID acquisition request packets to all known ports, wherein the field content of the corresponding packet is CC_WORD = 0xFF, ID_Index = 0xFF, and the content in ID_WORD is RRU_ID = 0xFF, and LocaIP = port number L = 0xF, representing a first initiated request; and NextP = port number N = 0, 1, 2 and 3, representing the port number of requester.

Step 3, an RRU in the initial state does not process any ID request packet and directly discards it.

Step 4, the RRU of first level (RRUO) sends a request packet to a BBU, wherein the format of the packet is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| 0xFF | 0xFF | 0xFF | 0xFF | 0xFF | 0xF\|0 |

Step 5, the BBU determines that a topological structure has not been established in RRU0 according to the dynamic situation of networking, responds the request and returns a response packet, wherein the format of the returned packet is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| 0x00 | RRU0 | 0x00 | 0x01 | RRU0 | 0\|0 |

Step 6, after receiving the response packet, RRU0 determines that the packet is a response packet from the BBU according to Local_ID = 0 and ID_RQ ≠ 0xFF, and determines here it is a termination according to RRU_ID = RRU0 = ID_RQ, and the acquired RRU_ID = RRU0; determines the RRU is of first level according to Local_Index = 0, Next_Index = 1; records ID_Index and ID_WORD; switches the state to the normal state and starts to establish an upper layer link according to the identifier allocated by the BBU.

Steps 4 to 6 are the process of establishing the upper layer link after the access of the RRU of the first level.

Step 7, the ID request packet sent by RRU1 arrives at RRU0 in the normal state, wherein the specific format is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| 0xFF | 0xFF | 0xFF | 0xFF | 0xFF | 0xF\|0 |

Step 8, after receiving the request packet, RRU0 determines that the request is an initial request according to CC_WORD = 0xFF, ID_Index = 0xFF, RRU_ID = 0xFF and LocalP = 0xF, and RRU0 responds a request, adds the Local_ID of itself, changes ID_RQ to be 0x00, fills Local_Index and Next_Index = Local_Index+1 and LocalP, and does not change the values of RRU_ID and NextP, wherein the specific format is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| RRU0 | 0x00 | 0x01 | 0x02 | 0xFF | 1\|0 |

Step 9, RRU1 receives the response packet from RRU0, records the responded information, changes ID_RQ to be 0xFF again, and resends a request to RRU0. The specific format is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| RRU0 | 0xFF | 0x01 | 0x02 | 0xFF | 1\|0 |

Step 10, after receiving the request packet, RRU0 determines that the packet is a request packet according to ID_RQ = RRU_ID = 0xFF, and determines that the packet is a second acknowledgement packet of a request which is called a second handshake identifier acquisition request, according to the remaining fields not equal to 0xFF; RRU0 compares whether Local_ID, Local_Index, Next_Index and LocalP matches, if not, directly discards the request packet, and if so, forwards the request packet to the upper layer.

Step 11, after receiving the request packet, the BBU determines that an RRU is requesting for an ID according to ID_RQ = 0xFF and RRU_ID = 0xFF; checks the validity of RRU0, if matches, the BBU returns an ID response packet to allocate an ID, if not, the BBU does not respond; in the response packet, the BBU changes the value of Local_ID to be 0 and changes the value of ID_RQ to be RRU0, representing that the packet is a BBU response packet; and the BBU changes RRU_ID to be RRU1, allocates a new ID and sends the response packet to RRU0. The specific format is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| 0x00 | RRU0 | 0x01 | 0x02 | RRU1 | 1\|0 |

Step 12, after receiving the response packet, RRU0 determines that the packet is an ID request response packet sent from the BBU according to the value of CC_WORD, and determines that the packet is an ID allocation response packet of a lower level RRU of itself according to the value of ID_RQ; RRU0 determines the port number, and forwards the packet to LocalP port.

Step 13, after receiving the response packet, RRU1 determines that the packet is an ID response packet (ID_RQ ≠ 0xFF) sent by the BBU (Local_ID = 0x00) according to CC_WORD, and records ID_Index and ID_WORD.

Steps 7 to 13 are the process of establishing the upper layer link after the access of the RRU of the second level.

Step 14, after accessing, RRU4 regularly broadcasts the ID request packet, which is similar to the request packet from RRU0 and RRU1, to each port, wherein only the value of NextP is changed according to different port numbers. The request packet arrives at RRU1, RRU3 and RRU6. Specifically, RRU6 is not allocated with an ID and does not respond the request packet, and RRU1 and RRU3 return the response packet to RRU4; RRU4 receives the complete response packet after waiting for a period of time long enough, and if multiple response packets are received, RRU4 compares the values of Local_Index, selects an RRU having the minimum identifier information (i.e. the value of Local_Index is minimum), and resend the request packet, namely, the second handshake identifier acquisition request, to the selected RRU, wherein the packet format is similar to that of the request packet resent by RRU1 to RRU0. According to the example above, the RRU having the minimum Local_Index is RRU1 (the link is the shortest). The format of the resent request packet is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| RRU1 | 0xFF | 0x02 | 0x03 | 0xFF | 3\|0 |

Step 15, after receiving the second handshake identifier acquisition request, similar to step 10, RRU1 determines that the packet is a resent quest packet, and forwards the packet to a port of a valid upper level RRU (although only RRU0 is available in this example, this process is also applicable in other cases); similar processes are preformed until the packet arrives at the BBU.

Step 16, after receiving the request packet, the BBU determines that an RRU is requesting for an ID according to ID_RQ = 0xFF and RRU_ID = 0xFF; the BBU checks the validity of RRU1, and if matches, the BBU returns an ID response packet to allocate an ID, if not, the BBU does not respond; in the response packet, the BBU changes the value of Local_ID to be 0 and changes the value of ID_RQ to be RRU0, representing that the packet is a response packet from the BBU; and the BBU changes RRU_ID to be RRU4, allocates a new ID and sends the response packet to RRU1 according to the established topological structure. The specific format is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| 0x00 | RRU1 | 0x02 | 0x03 | RRU4 | 3\|0 |

Step 17, after receiving the response packet, RRU1 determines that the packet is an ID request response packet sent from the BBU according to the value of CC_WORD, and determines that the packet is an ID allocation response packet of a lower level RRU of itself according to the value of ID_RQ; RRU1 determines the port number, and forwards the response packet to LocalP port.

Step 18, after receiving the response packet, RRU4 determines that the packet is an ID response packet sent by the BBU according to CC_WORD, and records ID_Index and ID_WORD to start to establish the upper layer link.

Steps 14 to 18 are the process of establishing the upper layer link after the access of the RRU of the third level.

Step 19, other processes of RRU ID request and acquisition are similar to the process above, thereby needing no further description here.

### Example 2:

Step 1, taking RRU4 as an example, if the link with RRU1 is disconnected and cannot be recovered, in case of link disconnection, the physical connection of RRU4 detects the link disconnection, and RRU4 retries to regularly initiate the ID request to each available port, but the format of request control word is different from that when the topological structure is initially established, wherein the value of ID_RQ is changed; the format is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| 0xFF | RRU4 | 0xFF | 0xFF | 0xFF | 0xF\|3 |

Step 2, after receiving the request packet, RRU3 determines that the packet is a re-request packet from RRU4 according to ID_RQ = RRU4, the values of Local_ID, Local_Index, Next_Index and RRU_ID are 0xFF, and the value of LocalP = 0xF, requesting for re-establishing of a link. RRU3 changes the values of Local_ID, ID_Index and LocalP and sends the packet to RRU4 through NextP, wherein the format is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| RRU3 | RRU4 | 2 | 3 | 0xFF | 1\|3 |

Step 3, after receiving a response packet from RRU3, RRU4 determines that the packet is a response packet from RRU3 according to CC_WORD and RRU_ID, and directly resends the response packet to RRU3 without changing the value of ID_RQ because the process is to re-establish the link.

Step 4, after receiving the packet, RRU3 determines that packet is a second handshake acknowledgement according to the values of CC_WORD and RRU_ID, and forwards the packet to the BBU after determining that ID_INDEX and LocalP are valid.

Step 5, after receiving the packet, the BBU determines that the packet is a link reestablishment request from RRU4 according to the values of ID_RQ and RRU_ID, refreshes the topological structure again according to the values of Local_ID, ID_INDEX, LocalP and NextP, changes RRU_ID to be RRU4, changes Local_ID to be 0x00, and changes ID_RQ to be RRU3, , and sends the packet to RRU3. The format is as follows.

| CC_WORD | | ID_Index | | ID_WORD | |
|---|---|---|---|---|---|
| Local_ID | ID_RQ | Local_Index | Next_Index | RRU_ID | LocalP\|NextP |
| 0x00 | RRU3 | 2 | 3 | RRU4 | 1\|3 |

Step 6, after receiving the response packet, RRU3 determines that the packet is an ID request response packet from the BBU according to the value of CC_WORD, determines that the packet is an ID allocation response packet from a lower level RRU of itself, determines the port number, and forwards the packet to LocalP port.

Step 7, after receiving the response packet, RRU4 determines that the packet is an ID response packet sent by the BBU according to CC_WORD and records ID_Index and ID_WORD; RRU4 starts to re-establish the upper layer link.

Steps 1 to 7 are the process of re-establishing the link.

### Device Embodiment

Based on the same inventive concept, the embodiments of the disclosure further provides a device for link adaptation of a radio remote unit, wherein the device can be configured to implement the method embodiments above; and as the principle of the device to solve the problem is similar to the method for link adaptation of a radio remote unit, the implementation of the device can be referred to the method without describing the duplicated contents.

Fig. 5 is a block diagram showing a device for implementing link adaptation of a radio remote unit according to an embodiment of the disclosure; as shown in Fig.5, the device comprises:
a first sending module 10, configured to regularly broadcast and send identifier acquisition request information through a port;
a first receiving module 20, configured to receive response information of the identifier acquisition request information; and
an establishing module 30, connected with the first receiving module 20 and configured to establish an upper layer link according to an allocation identifier contained in the response information, in case that the response information received by the first receiving module 20 is identifier allocation response information from a BBU.

The device may further comprise: a second sending module (not shown), configured to, when the response information received by the first receiving module 20 is acknowledgement information from an upper level RRU of itself, send second handshake identifier acquisition request information to an RRU having the minimum identifier information among multiple upper level RRUs, in case that the received response information is acknowledgement information from the upper level RRUs, or to send second handshake identifier acquisition request information to one upper level RRU, in case that the received response information is acknowledgement information from the one upper level RRU; and a second receiving module, configured to receive identifier allocation response information from the BBU through the upper level RRU.

Preferably, the device further comprises: an acquiring module (not shown), configured to acquire physical port information.

When the radio remote unit acts as an upper level RRU, the device may further comprise: a third receiving module (not shown), configured to receive identifier acquisition request information from a lower level RRU of the RRU; and a third sending module (not shown), configured to send acknowledgement information of the identifier acquisition request information to a lower level RRU of the RRU, in case that the third receiving module first receives the identifier acquisition request information of the lower level RRU, wherein the acknowledgement information includes identifier information of the RRU; and further configured to forward second handshake identifier acquisition request information to the BBU, in case that the third receiving module receives the second handshake identifier acquisition request information from the lower level RRU.

In the specific embodiment, the first receiving module, second receiving module and third receiving module can be combined together, so are the first sending module, second sending module and third sending module.

To sum up, according to the technical solution of the disclosure, through actively initiating an ID request by the RRU and dynamically refreshing the topological structure by the BBU, the topological structure is dynamically established, so that the networking is more flexible, and the flexibility of REC networking and RE networking is brought into full play. And as multiple physical paths are established between the lower level and upper level RRUs, in case that a certain RRU is damaged or the optical fiber link in a certain level is disconnected, the lower level RRU will not be affected, so as to improve the reliability of the networking and save the cost on operation and maintenance

The above are only embodiments of the disclosure and do not aim to limit the disclosure. For those skilled in the art, various modifications and changes of the disclosure can be made. Any modifications, equivalent replacements, improvements and the like within the spirit and principle of the disclosure shall fall within the scope of protection of claims of the disclosure.

## Claims

1. A method for link adaptation of a Radio Remote Unit (RRU), comprising:
regularly broadcasting and sending, by an RRU, identifier acquisition request information through a port of the RRU itself;
receiving, by the RRU, response information of the identifier acquisition request information; and
when the response information is identifier allocation response information from a Base Band Unit (BBU), establishing, by the RRU, an upper layer link according to an allocation identifier contained in the response information.

2. The method according to claim 1, further comprising: when the response information received by the RRU is acknowledgement information from an upper level RRU thereof,
when the RRU receives the acknowledgement information from multiple upper level RRUs, sending, by the RRU, second handshake identifier acquisition request information to an RRU with minimum identifier information among the multiple upper level RRUs; or when the RRU receives the acknowledgement information from one upper level RRU, sending, by the RRU, second handshake identifier acquisition request information to the one upper level RRU; and
receiving, by the RRU, the identifier allocation response information from the BBU through the upper level RRU, and establishing, by the RRU, the upper layer link according to the allocation identifier contained in the response information.

3. The method according to claim 1, further comprising: before sending, by the RRU, the identifier acquisition request information through the port of the RRU itself, acquiring, by the RRU, physical port information of the RRU itself.

4. The method according to claim 2, further comprising:
receiving, by the RRU, identifier acquisition request information from a lower level RRU thereof; and
sending, by the RRU, acknowledgement information of the identifier acquisition request information to the lower level RRU thereof.

5. The method according to claim 4, further comprising:
receiving, by the RRU, second handshake identifier acquisition request information from the lower level RRU thereof; and
forwarding, by the RRU, the second handshake identifier acquisition request information to the BBU; and
after receiving, by the RRU, the identifier allocation response information from the BBU, forwarding, by the RRU, the identifier allocation response information to the lower level RRU thereof.

6. The method according to any one of claims 1 to 5, further comprising:
receiving, by the BBU, the identifier acquisition request information from the RRU, allocating, by the BBU, an identifier for the RRU, and sending, by the BBU, the identifier to the RRU; and
refreshing, by the BBU, a network topology structure.

7. A device for implementing link adaptation of a Radio Remote Unit (RRU), comprising:
a first sending module, configured to regularly broadcast and send identifier acquisition request information through a port;
a first receiving module, configured to receive response information of the identifier acquisition request information; and
an establishing module, configured to establish an upper layer link according to an allocation identifier contained in the response information, in case that the response information received by the first receiving module is identifier allocation response information from a Base Band Unit (BBU).

8. The device according to claim 7, further comprising:
a second sending module, configured to send second handshake identifier acquisition request information to an RRU with minimum identifier information among multiple upper level RRUs thereof, in case that the response information received by the first receiving module is acknowledgement information from the multiple upper level RRUs; and further configured to send second handshake identifier acquisition request information to one upper level RRU thereof, in case that the response information received by the first receiving module is acknowledgement information from the one upper level RRU; and
a second receiving module, configured to receive identifier allocation response information from the BBU through the upper level RRU.

9. The device according to claim 7, further comprising:
an acquiring module, configured to acquire physical port information.

10. The device according to claim 7, further comprising:
a third receiving module, configured to receive the identifier acquisition request information; and
a third sending module, configured to send acknowledgement information of the identifier acquisition request information to a lower level RRU, in case that the third receiving module receives the identifier acquisition request information of the lower level RRU; and further configured to forward second handshake identifier acquisition request information to the BBU, in case that the third receiving module receives the second handshake identifier acquisition request information from the lower level RRU.
